# EUROPEAN PATENT APPLICATION

(11) **EP 4 485 907 A1**
(43) Date of publication of application: **01.01.2025**
(21) Application number: 23773614.5
(22) Date of filing: 08.03.2023
(51) Int. Cl.: H04L 69/40

(54) **COMMUNICATION METHOD AND COMMUNICATION APPARATUS**

(30) Priority: 22.03.2022 CN 202210289197
(71) Applicant: Huawei Technologies Co., Ltd., Shenzhen, Guangdong 518129 (CN)
(72) Inventor: SUN, Fei, Shenzhen, Guangdong 518129 (CN); ZENG, Qinghai, Shenzhen, Guangdong 518129 (CN); HAN, Feng, Shenzhen, Guangdong 518129 (CN)
(74) Representative: Gill Jennings & Every LLP
(86) International application number: PCT/CN2023/080319
(87) International publication number: WO 2023/179365

(57) **Abstract**

An embodiment of this application provides a communication method. The method includes: A second central unit control plane (central unit control plane, CU-CP) receives context information from a first CU-CP, where the context information includes a context of a distributed unit (distributed unit, DU) and a context of a first central unit user plane (central unit user plane, CU-UP). The context information is used by the second CU-CP to communicate with the DU and the first CU-UP. The second CU-CP receives a first message, and communicates with the DU and the first CU-UP based on the first message through a communication interface. According to the communication method provided in this application, a backup CU-CP can be provided for the first CU-CP, to reduce service interruption and improve system robustness.

## Description

This application claims priority to Chinese Patent Application No. 202210289197.X, filed with the China National Intellectual Property Administration on March 22, 2022 and entitled "COMMUNICATION METHOD AND COMMUNICATION APPARATUS", which is incorporated herein by reference in its entirety.

### TECHNICAL FIELD

Embodiments of this application relate to the communication field, and more specifically, to a communication method and communication apparatus.

### BACKGROUND

A single base station may include a central unit (central unit, CU) and a distributed unit (distributed unit, DU), and multiple DUs share one CU. This can reduce costs and facilitate network expansion. The central unit CU may be further divided into a control plane (CU-control plane, CU-CP) and a user plane (CU-user plane, CU-UP). The CU-CP is responsible for a control plane function, and the CU-UP is responsible for a user plane function. A single base station may include a single CU-CP, multiple CU-UPs, and multiple DUs. A single CU-CP may be connected to multiple DUs and multiple CU-UPs.

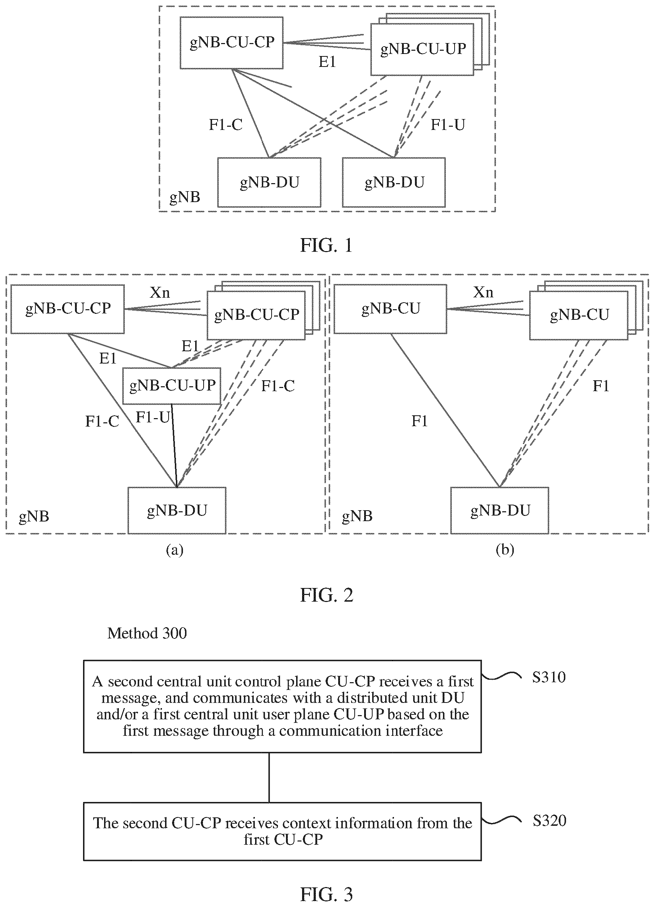

FIG. 1 is a diagram of an architecture for separation of a CU-CP and a CU-UP. As shown in FIG. 1, the CU-CP communicates with the CU-UP through an E1 communication interface, the CU-CP communicates with a DU through an F1-C communication interface, and the CU-UP communicates with the DU through an F1-U communication interface.

This architecture is vulnerable to a single-point failure of the CU-CP. The single-point failure of the CU-CP may cause traffic interruption of multiple CU-UPs and/or multiple DUs of the base station and disconnection of a terminal device served by the base station.

### SUMMARY

Embodiments of this application provide a communication method and a communication apparatus. A backup is provided for a first CU-CP, and a DU and/or a first CU-UP can communicate, through a communication interface, with a second CU-CP acting as a backup of the first CU-CP in the case of being faulty, overloaded, or the like. This reduces service interruption and improves system robustness.

According to a first aspect, a communication method is provided. The method is applied to a second CU-CP, a chip that performs a function of the second CU-CP, a processor that performs a function of the second CU-CP, software or a logical module that performs a function of the second CU-CP, or the like. This is not limited in this application. The method includes: receiving context information from a first CU-CP, where the context information includes a context of a DU and/or a context of a first CU-UP, and the context information is used by the second CU-CP to communicate with the DU and/or the first CU-UP; receiving a first message; and communicating with the DU and/or the first CU-UP based on the first message through a communication interface.

It should be noted that the context information from the first CU-CP may be received before the second CU-CP communicates with the DU and/or the first CU-UP through the communication interface, or may be received after the second CU-CP communicates with the DU and/or the first CU-UP through the communication interface.

According to the communication method provided in this embodiment of this application, a backup is provided for the first CU-CP. When the first CU-CP is faulty, overloaded, or the like, the DU and/or the first CU-UP can communicate, through the communication interface, with the second CU-CP acting as the backup of the first CU-CP. This reduces service interruption and improves system robustness. In addition, the second CU-CP receives the context information of the first CU-CP, and the second CU-CP can quickly use the context information to provide a service for the DU and/or the first CU-UP. This reduces a system fault delay.

With reference to the first aspect, in some implementations of the first aspect, the receiving context information from a first CU-CP may be receiving the context information from the first CU-CP via an access and mobility management function network element AMF.

Optionally, the first CU-CP may send the context information to the AMF periodically or in real time, and may obtain the context information via the AMF when communicating with the DU and/or the first CU-UP through the communication interface. Optionally, the context information includes identification information of the first CU-CP. When the context information is obtained, the identification information of the first CU-CP may be sent to the AMF, and the AMF may send the context information of the first CU-CP to the second CU-CP. When the context information is obtained, identification information of a terminal device served by the first CU-CP may alternatively be sent to the AMF, and the AMF may send context information related to the terminal device to the second CU-CP.

The context information is sent to the AMF. When the second CU-CP serves the DU and/or the first CU-UP, the context information is obtained from the AMF. This ensures that when the second CU-CP that is not a backup of the first CU-CP serves the DU and/or the first CU-UP, work of the second CU-CP is not affected. This reduces overheads of receiving the context information by the second CU-CP.

With reference to the first aspect, in some implementations of the first aspect, the first message includes state value information from the first CU-CP. For example, beneficial effects include: Whether the first CU-CP is faulty can be determined in time based on the state value information. This reduces service interruption and improves system robustness.

With reference to the first aspect, in some implementations of the first aspect, the communicating with the DU and/or the first CU-UP based on the first message through a communication interface includes: determining, based on the state value information, that the first CU-CP is overloaded or faulty; determining, based on that first CU-CP is overloaded or faulty, to communicate with the DU and/or the first CU-UP through the communication interface; and communicating, by the second CU-CP, with the DU and/or the first CU-UP through the communication interface.

Optionally, the state value information may be information reflecting a load value of the first CU-CP. For example, that the load value information is greater than a first threshold indicates that the first CU-CP is overloaded.

Optionally, the state value information may be information reflecting whether the first CU-CP is faulty. For example, that the state value information is an error value indicates that the first CU-CP is faulty. For another example, that the state value information is null indicates that the first CU-CP is faulty.

With reference to the first aspect, in some implementations of the first aspect, the first message includes first request information from the DU and/or the first CU-UP, and the first request information is for requesting to communicate with the second CU-CP through the communication interface.

With reference to the first aspect, in some implementations of the first aspect, the first message includes first indication information from the first CU-CP, and the first indication information indicates that the first CU-CP is overloaded. It may be determined, based on that the first CU-CP is overloaded, to communicate with the DU and/or the first CU-CP through the communication interface.

It should be noted that the first indication information may be sent by the first CU-CP after the first CU-CP determines that the first CU-CP is overloaded, or may be sent by the first CU-CP as indicated by another network element or unit after the another network element or unit determines that the first CU-CP is overloaded.

With reference to the first aspect, in some implementations of the first aspect, the first message includes second indication information from the first CU-CP, and the second indication information indicates to communicate with the DU and/or the first CU-UP through the communication interface.

It should be noted that the second indication information may be sent by the first CU-CP after the first CU-CP determines that the first CU-CP is overloaded and determines to indicate the second CU-CP to communicate with the DU and/or the first CU-UP through the communication interface, or may be sent by another network element or unit to the first CU-CP and forwarded by the first CU-CP after the another network element or unit determines that the first CU-CP is overloaded and determines to indicate the second CU-CP to communicate with the DU and/or the first CU-UP through the communication interface.

It should be noted that, in the implementations of the first aspect, performing communication through the communication interface may be establishing a communication interface and performing communication through the communication interface, or may be activating a standby communication interface and performing communication through the standby communication interface.

It should be noted that the standby communication interface is established in advance. A party that uses the communication interface sends a piece of standby indication information to make the communication interface in a standby state or a cold backup state.

According to a second aspect, a communication method is provided. The method is applied to a first CU-CP, a chip that performs a function of the first CU-CP, a processor that performs a function of the first CU-CP, software or a logical module that performs a function of the first CU-CP, or the like. This is not limited in this application. The method includes: sending context information to a second CU-CP, where the context information includes a context of a distributed unit DU and/or a context of a first central unit user plane CU-UP, and the context information is used by the second CU-CP to communicate with the DU and/or the first CU-UP.

According to the communication method provided in this embodiment of this application, a backup is provided for the first CU-CP. When the first CU-CP is faulty, overloaded, or the like, the DU and/or the first CU-UP can communicate, through a communication interface, with the second CU-CP acting as the backup of the first CU-CP. This reduces service interruption and improves system robustness. In addition, the second CU-CP receives the context information of the first CU-CP, so that the second CU-CP can quickly provide a service for the DU and/or the first CU-UP based on the context information. This reduces a system fault delay.

With reference to the second aspect, in some implementations of the second aspect, the second CU-CP is determined by the first CU-CP from a set of first CU-CPs, the set of first CU-CPs also includes the first CU-CP, and any two CU-CPs in the set of first CU-CPs support mutual backup; and the first CU-CP sends third indication information to the DU and/or the first CU-UP, where the third indication information indicates the second CU-CP, so that the DU and/or the first CU-UP determine/determines the second CU-CP acting as the backup of the first CU-CP.

It should be understood that the set of first CU-CPs may be understood as a set of CU-CPs that are used as backups of the first CU-CP, and properties or configurations of the CU-CPs included in the set may be similar.

With reference to the second aspect, in some implementations of the second aspect, fourth indication information is sent to the DU and/or the first CU-UP, where the fourth indication information indicates a set of first CU-CPs, the set of first CU-CPs includes the first CU-CP and the second CU-CP, and any two CU-CPs in the set of first CU-CPs support mutual backup; and feedback information from the DU and/or the first CU-UP is received, where the feedback information indicates the second CU-CP. The first CU-CP receives the feedback information of the DU and/or the first CU-UP, and determines the second CU-CP, to subsequently interact with the second CU-CP.

It should be understood that, in this implementation, the first CU-CP indicates the set of first CU-CPs to the DU and/or the first CU-UP, so that the DU and/or the first CU-UP may determine the second CU-CP from the set of first CU-CPs as a backup.

With reference to the second aspect, in some implementations of the second aspect, state value information of the first CU-CP is sent to the second CU-CP, where the state value information is for determining that the first CU-CP is overloaded or faulty.

With reference to the second aspect, in some implementations of the second aspect, state value information of the first CU-CP is sent to the DU and/or the first CU-UP, where the state value information is for determining that the first CU-CP is overloaded or faulty.

Optionally, the state value information may be information reflecting a load value of the first CU-CP. For example, that the load value information is greater than a first threshold indicates that the first CU-CP is overloaded.

Optionally, the state value information may be information reflecting whether the first CU-CP is faulty. For example, that the state value information is an error value indicates that the first CU-CP is faulty. For another example, that the state value information is null indicates that the first CU-CP is faulty.

With reference to the second aspect, in some implementations of the second aspect, first indication information is sent to the second CU-CP, where the first indication information indicates that the first CU-CP is overloaded.

With reference to the second aspect, in some implementations of the second aspect, fifth indication information is sent to the DU and/or the first CU-UP, where the fifth indication information indicates that the first CU-CP is overloaded.

It should be noted that the first indication information or the fifth indication information may be sent after the first CU-CP determines, based on that a load value of the first CU-CP is greater than a first threshold, that the first CU-CP is overloaded, or the first indication information or the fifth indication information may be sent after the first CU-CP receives indication information that is from another network element or unit and that indicates that the first CU-CP is overloaded. For example, the another network element or unit may be an AMF.

With reference to the second aspect, in some implementations of the second aspect, second indication information is sent to the second CU-CP, where the second indication information indicates the second CU-CP to communicate with the DU and/or the first CU-UP through a communication interface.

With reference to the second aspect, in some implementations of the second aspect, the first CU-CP sends sixth indication information to the DU and/or the first CU-UP, where the sixth indication information indicates the DU and/or the first CU-UP to communicate with the second CU-CP through the communication interface.

It should be noted that the second indication information or the sixth indication information may be sent by the first CU-CP after the first CU-CP determines, based on that a load value of the first CU-CP is greater than a first threshold, that the first CU-CP is overloaded and determines to indicate the second CU-CP to communicate with the DU and/or the first CU-UP through the communication interface, or indicate the DU and/or the first CU-UP to communicate with the second CU-CP through the communication interface. Alternatively, the second indication information or the sixth indication information may be sent by another network element or unit to the first CU-CP and forwarded by the first CU-CP after the another network element or unit determines, based on that the load value of the first CU-CP is greater than the first threshold, that the first CU-CP is overloaded and determines to indicate the second CU-CP to communicate with the DU and/or the first CU-UP through the communication interface, or indicate the DU and/or the first CU-UP to communicate with the second CU-CP through the communication interface.

It should be noted that, in the implementations of the second aspect, performing communication through the communication interface may be establishing a communication interface and performing communication through the communication interface, or may be activating a standby communication interface and performing communication through the standby communication interface.

It should be noted that the standby communication interface is established in advance. A party that uses the communication interface sends a piece of standby indication information to make the communication interface in a standby state or a cold backup state.

According to a third aspect, a communication method is provided. The method is applied to a DU or a first CU-UP, a chip that performs a function of a DU or a first CU-UP, a processor that performs a function of a DU or a first CU-UP, or software or a logical module that performs a function of a DU or a first CU-UP. This is not limited in this application. The method includes: determining a second CU-CP; receiving a second message; and sending first request information to the second CU-CP based on the second message, where the first request information is for requesting to communicate with the second CU-CP through a communication interface. Alternatively, the method includes: determining a second CU-CP; receiving, by the first CU-UP, a second message; and sending first request information to the second CU-CP based on the second message, where the first request information is for requesting to communicate with the second CU-CP through a communication interface.

According to the communication method provided in this embodiment of this application, a backup is provided for a first CU-CP. When the first CU-CP is faulty, overloaded, or the like, a DU and/or a first CU-UP can communicate, through the communication interface, with the second CU-CP acting as the backup of the first CU-CP. This reduces service interruption and improves system robustness.

With reference to the third aspect, in some implementations of the third aspect, the determining a second CU-CP includes: receiving third indication information of a first CU-CP, and determining the second CU-CP based on the third indication information, where the third indication information indicates the second CU-CP. Alternatively, the determining, by the first CU-UP, a second CU-CP includes: receiving third indication information of a first CU-CP, and determining the second CU-CP based on the third indication information, where the third indication information indicates the second CU-CP.

With reference to the third aspect, in some implementations of the third aspect, the determining a second CU-CP includes: receiving fourth indication information sent by a first CU-CP, and determining the second CU-CP from a set of first CU-CPs, where the fourth indication information indicates the set of first CU-CPs, the set of first CU-CPs includes the first CU-CP, and any two CU-CPs in the set of first CU-CPs support mutual backup. Alternatively, the determining a second CU-CP includes: receiving fourth indication information sent by a first CU-CP, and determining the second CU-CP from a set of first CU-CPs, where the fourth indication information indicates the set of first CU-CPs, the set of first CU-CPs includes the first CU-CP, and any two CU-CPs in the set of first CU-CPs support mutual backup

With reference to the third aspect, in some implementations of the third aspect, after the second CU-CP is determined from the set of first CU-CPs, feedback information is sent to the first CU-CP, where the feedback information indicates the second CU-CP. Alternatively, after the second CU-CP is determined from the set of first CU-CPs, feedback information is sent to the first CU-CP, where the feedback information indicates the second CU-CP.

With reference to the third aspect, in some implementations of the third aspect, the second message includes state value information from the first CU-CP.

With reference to the third aspect, in some implementations of the third aspect, the sending first request information to the second CU-CP based on the second message includes: determining, based on the state value information of the first CU-CP, that the first CU-CP is overloaded or faulty; determining, based on that the first CU-CP is overloaded or faulty, to communicate with the second CU-CP through the communication interface; and sending the first request information to the second CU-CP. Alternatively, in some implementations of the third aspect, the sending first request information to the second CU-CP based on the second message includes: determining, based on the state value information of the first CU-CP, that the first CU-CP is overloaded or faulty; determining, based on that the first CU-CP is overloaded or faulty, to communicate with the second CU-CP through the communication interface; and sending, by the first CU-UP, the first request information to the second CU-CP.

Optionally, the state value information may be information reflecting a load value of the first CU-CP. For example, that the load value information is greater than a first threshold indicates that the first CU-CP is overloaded.

Optionally, the state value information may be information reflecting whether the first CU-CP is faulty. For example, that the state value information is an error value indicates that the first CU-CP is faulty. For another example, that the state value information is null indicates that the first CU-CP is faulty.

With reference to the third aspect, in some implementations of the third aspect, the second message includes fifth indication information from the first CU-CP, and the fifth indication information indicates that the first CU-CP is overloaded.

With reference to the third aspect, in some implementations of the third aspect, the second message includes sixth indication information from the first CU-CP, and the sixth indication information indicates the DU to communicate with the second CU-CP through the communication interface. Alternatively, the sixth indication information indicates the first CU-UP to communicate with the second CU-CP through the communication interface.

After determining that the first CU-CP is overloaded or faulty, another network element or unit may also indicate the DU and/or the first CU-UP to communicate with the first CU-CP through the communication interface.

It should be noted that, in the implementations of the third aspect, performing communication through the communication interface may be establishing a communication interface and performing communication through the communication interface, or may be activating a standby communication interface and performing communication through the standby communication interface.

It should be noted that the standby communication interface is established in advance. A party that uses the communication interface sends a piece of standby indication information to make the communication interface in a standby state or a cold backup state.

According to a fourth aspect, a communication apparatus is provided. The apparatus includes units configured to perform the steps of the communication method in the first aspect and the implementations of the first aspect.

In a design, the communication apparatus is a communication chip. The communication chip may include an input circuit or an interface configured to send information or data, and an output circuit or an interface configured to receive information or data.

In another design, the communication apparatus is a communication device (for example, a second CU-CP), and the communication chip may include a transmitter configured to send information and a receiver configured to receive information or data.

According to a fifth aspect, a communication apparatus is provided. The apparatus includes units configured to perform the steps of the communication method in the second aspect and the implementations of the second aspect.

In a design, the communication apparatus is a communication chip. The communication chip may include an input circuit or an interface configured to send information or data, and an output circuit or an interface configured to receive information or data.

In another design, the communication apparatus is a communication device (for example, a first CU-CP), and the communication chip may include a transmitter configured to send information and a receiver configured to receive information or data.

According to a sixth aspect, a communication apparatus is provided. The apparatus includes units configured to perform the steps of the communication method in the third aspect and the implementations of the third aspect.

In a design, the communication apparatus is a communication chip. The communication chip may include an input circuit or an interface configured to send information or data, and an output circuit or an interface configured to receive information or data.

In another design, the communication apparatus is a communication device (for example, a DU or a first CU-UP), and the communication chip may include a transmitter configured to send information and a receiver configured to receive information or data.

According to a seventh aspect, a communication device is provided. The device includes a processor and a memory. The memory is configured to store a computer program, and the processor is configured to invoke the computer program from the memory and run the computer program, to enable the communication device to perform the communication method in the first aspect and the implementations of the first aspect.

Optionally, there are one or more processors, and there are one or more memories.

Optionally, the memory may be integrated with the processor, or the memory and the processor are separated.

Optionally, the communication device further includes a transmitter (transmitter) and a receiver (receiver).

According to an eighth aspect, a communication device is provided. The device includes a processor and a memory. The memory is configured to store a computer program, and the processor is configured to invoke the computer program from the memory and run the computer program, to enable the communication device to perform the communication method in the second aspect and the implementations of the second aspect.

Optionally, there are one or more processors, and there are one or more memories.

Optionally, the memory may be integrated with the processor, or the memory and the processor are separated.

Optionally, the communication device further includes a transmitter (transmitter) and a receiver (receiver).

According to a ninth aspect, a communication device is provided. The device includes a processor and a memory. The memory is configured to store a computer program, and the processor is configured to invoke the computer program from the memory and run the computer program, to enable the communication device to perform the communication method in the third aspect and the implementations of the third aspect.

Optionally, there are one or more processors, and there are one or more memories.

Optionally, the memory may be integrated with the processor, or the memory and the processor are separated.

Optionally, the communication device further includes a transmitter (transmitter) and a receiver (receiver).

According to a tenth aspect, a computer program product is provided. The computer program product includes a computer program (which may also be referred to as code or instructions). When the computer program is run, a computer is enabled to perform the communication method according to any one of the first aspect to the third aspect and the implementations of the aspects.

According to an eleventh aspect, a communication system is provided. The system includes at least one apparatus configured to perform the method in the first aspect and the implementations of the first aspect.

Optionally, the communication system further includes at least one apparatus configured to perform the method in the second aspect and the implementations of the second aspect.

Optionally, the communication system further includes at least one apparatus configured to perform the method in the third aspect and the implementations of the third aspect.

According to a twelfth aspect, a communication system is provided. The system includes at least one apparatus configured to perform the method in the second aspect and the implementations of the second aspect.

Optionally, the communication system further includes at least one apparatus configured to perform the method in the first aspect and the implementations of the first aspect.

Optionally, the communication system further includes at least one apparatus configured to perform the method in the third aspect and the implementations of the third aspect.

According to a thirteenth aspect, a communication system is provided. The system includes at least one apparatus configured to perform the method in the third aspect and the implementations of the third aspect.

Optionally, the communication system further includes at least one apparatus configured to perform the method in the first aspect and the implementations of the first aspect.

Optionally, the communication system further includes at least one apparatus configured to perform the method in the second aspect and the implementations of the second aspect.

According to a fourteenth aspect, a chip system is provided. The system includes a memory and a processor. The memory is configured to store a computer program, and the processor is configured to invoke the computer program from the memory and run the computer program, to enable a communication device in which the chip system is installed to perform the communication method in any one of the foregoing aspects and the implementations of the foregoing aspects.

The chip system may include an input circuit or interface configured to send information or data, and an output circuit or interface configured to receive information or data.

### BRIEF DESCRIPTION OF DRAWINGS

FIG. 1 is a diagram of an architecture for separation of a CU-CP and a CU-UP;
FIG. 2 is a diagram of a system architecture according to an embodiment of this application;
FIG. 3 is a diagram of an example of a communication method according to an embodiment of this application;
FIG. 4 is a diagram of an embodiment in which a first CU-CP determines a second CU-CP from a set of first CU-CPs according to this application;
FIG. 5 shows an example communication method according to an embodiment of this application;
FIG. 6 shows another example communication method according to an embodiment of this application;
FIG. 7 is a diagram of another example of a communication method according to an embodiment of this application;
FIG. 8 is a diagram of an example communication apparatus according to an embodiment of this application;
FIG. 9 is a diagram of another example communication apparatus according to an embodiment of this application; and
FIG. 10 is a diagram of another example communication apparatus according to an embodiment of this application.

### DESCRIPTION OF EMBODIMENTS

The following describes technical solutions of this application with reference to accompanying drawings.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5^{th} generation (5^{th} generation, 5G) system, or a new radio (new radio, NR) system.

A terminal device in embodiments of this application may be user equipment, an access terminal, a subscriber unit, a subscriber station, a mobile station, a remote station, a remote terminal, a mobile device, a user terminal, a terminal, a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a 5G network, a terminal device in an evolved public land mobile network (public land mobile network, PLMN), or the like. This is not limited in embodiments of this application.

A network device in embodiments of this application may be a device configured to communicate with a terminal device. The network device may be an evolved NodeB (evolved NodeB, eNB, or eNodeB) in an LTE system, or may be a wireless controller in a cloud radio access network (cloud radio access network, CRAN) scenario. Alternatively, the network device may be a relay node, an access point, a vehicle-mounted device, a wearable device, a network device in a 5G network, a network device in an evolved PLMN network, or the like. This is not limited in embodiments of this application.

The term "and/or" in this application describes only an association relationship for associated objects, and indicates that three relationships may exist. For example, "A and/or B" may indicate the following three cases: Only A exists; both A and B exist; or only B exists. A and B may be singular or plural. In addition, the character "/" in this specification indicates an "or" relationship between the associated objects.

FIG. 2 is a diagram of a system architecture according to an embodiment of this application. (a) in FIG. 2 shows an architecture for separation of a CU-CP and a CU-UP. A single DU may communicate with multiple CU-CPs through an F1-C interface, and a single CU-UP may communicate with multiple CU-CPs through an E1 interface. (b) in FIG. 2 shows an architecture for separation of a CU and a DU. A single DU may communicate with multiple CUs through an F1 interface.

FIG. 3 is a diagram of an example of a communication method according to an embodiment of this application. As shown in FIG. 3, the method 300 includes the following steps.

S310: Receive a first message, and communicate with a DU and/or a first CU-UP based on the first message through a communication interface.

This embodiment of this application is applied to a second CU-CP, a chip that performs a function of a second CU-CP, a processor that performs a function of a second CU-CP, software or a logical module that performs a function of a second CU-CP, or the like. This is not limited in this application. It should be noted that communication among the first CU-CP, the second CU-CP, the DU, the first CU-UP, and some network elements in a core network is performed through the communication interface.

In the method provided in this embodiment of this application, before two network elements or units communicate with each other through the communication interface, the communication interface needs to be established or activated first.

Performing communication through the communication interface may include establishing a communication interface and performing communication through the communication interface. In other words, when there is a communication requirement, the communication interface is first established, and then communication is performed through the communication interface.

In addition, performing communication through the communication interface may include activating a standby communication interface and performing communication through the standby communication interface. For example, the standby communication interface is established in advance. Specifically, before there is a communication requirement, the communication interface is established in advance, and the communication interface is enabled to be in a standby state based on standby indication information. When there is a communication requirement, the standby communication interface is activated first, and then communication is performed through the communication interface.

For example, two parties that communicate through the communication interface may be A and B. The standby communication interface may be requested to be established by A, and activated by B. Alternatively, the standby communication interface may be requested to be established by A, and activated by A.

The communication interface is established in advance and is in the standby state. When there is a communication requirement, the standby communication interface is activated and communication is performed through the communication interface. In comparison with a case in which the communication interface is established and used for communication when there is a communication requirement, this method enables the DU and/or the first CU-UP to quickly communicate with the second CU-CP through the communication interface, and continues to provide a service for a terminal device served by the DU and/or the first CU-UP, thereby reducing service interruption of the terminal device and improving network robustness.

In an example, a process in which the CU-CP communicate with the DU through the communication interface may include an F1-C communication interface establishment process: The CU-CP sends F1-C communication interface establishment request information to the DU, and the DU receives the request information and sends, to the CU-CP, a response message corresponding to the request information. The CU-CP and the DU may communicate with each other through the F1-C interface. It should be noted that the F1-C communication interface establishment request information may alternatively be sent by the DU to the CU-CP, and the response message is adaptively modified. An initiator of a communication interface establishment request is not particularly limited in this embodiment of this application.

In another example, the F1-C communication interface establishment process may be completed in advance, and then the CU-CP sends a standby instruction to the DU, to indicate that the F1-C communication interface is in the standby state. A process in which the CU-CP communicates with the DU through the communication interface may include an F1-C communication interface activation process: The CU-CP sends an activation instruction to the DU, to indicate that the F1-C communication interface is in an activated state. The CU-CP and the DU may communicate with each other through the activated F1-C interface.

Similarly, a process in which the CU-CP communicates with the CU-UP through an E1 communication interface, a process in which the CU-UP communicates with the DU through an F1-U communication interface, a process in which the CU-CP communicates with the core network through the communication interface, and the like are similar to the processes in the foregoing examples. For details, refer to the foregoing processes. Details are not described again.

It should be noted that, in the method provided in embodiments of this application, the CU-CP, the CU-UP, and the like may be hardware devices that perform a user plane function or a control plane function; or the CU-CP, the CU-UP, and the like may be software modules that perform a user plane function or a control plane function. In other words, the CU-CP and the CU-UP may belong to a same hardware device. This is not limited in embodiments of this application.

For example, the second CU-CP belongs to a set of first CU-CPs. Any two CU-CPs in the set of first CU-CPs support mutual backup.

Specifically, the set of first CU-CPs includes the first CU-CP and the second CU-CP. The second CU-CP may be understood as a backup of the first CU-CP, and the first CU-CP may be understood as a source CU-CP that provides a service for the DU and/or the first CU-UP.

Optionally, a CU-CP other than the first CU-CP included in the set of first CU-CPs may be used only as the backup of the first CU-CP, or a CU-CP other than the first CU-CP in the set of first CU-CPs does not serve a terminal device other than the terminal device served by the first CU-CP.

The terminal device served by the first CU-CP is a terminal device served by a base station to which the first CU-CP belongs. The terminal device served by the first CU-CP may alternatively be a terminal device served by all DUs and/or the first CU-UP served by the first CU-CP. In other words, the DU and/or the first CU-UP serve the terminal device, and the first CU-CP serves the DU and/or the first CU-UP.

If the CU-CP other than the first CU-CP included in the set of first CU-CPs is only the backup of the first CU-CP, configuration information of the CU-CP other than the first CU-CP in the set of first CU-CPs may be consistent with configuration information of the first CU-CP.

Optionally, the CU-CP other than the first CU-CP included in the set of first CU-CPs may be not just the backup of the first CU-CP, or before the CU-CP other than the first CU-CP in the set of first CU-CPs acts as the backup of the first CU-CP, the CU-CP may further serve a terminal device other than the terminal device served by the first CU-CP.

If the CU-CP other than the first CU-CP included in the set of first CU-CPs is not just the backup of the first CU-CP, configuration information of the CU-CP other than the first CU-CP in the set of first CU-CPs may be inconsistent with configuration information of the first CU-CP.

Specifically, configuration information of multiple CU-CPs in the set of first CU-CPs may include one or more of the following: a global cell identifier (cell global identifier, CGI), and configurations related to encryption and integrity protection of user plane and control plane data (for example, KRRCint (RRC signaling integrity protection key), KRRCenc (RRC signaling encryption key), KUpint (user plane integrity protection key), and KUPenc (user plane encryption key)).

Optionally, the multiple CU-CPs in the set of first CU-CPs may share encryption and integrity protection keys for user plane data and control plane data.

It should be understood that one of multiple network elements or units (for example, the first CU-CP, the first CU-UP, the DU, an AMF, and an operation, administration, and maintenance (operation, administration, and maintenance, OAM) network element) may determine the second CU-CP from the set of first CU-CPs. In other words, a backup CU-CP may be determined by one of multiple network elements, units, or the like.

For example, the second CU-CP may be determined by the OAM of the core network from the set of first CU-CPs and preconfigured for the first CU-CP. For another example, the second CU-CP may be determined by the OAM of the core network from the set of first CU-CPs and preconfigured for the DU or the first CU-UP through the first CU-CP.

Before the second CU-CP is determined from the set of first CU-CPs, the one of the multiple network elements or units (for example, the first CU-CP, the first CU-UP, the DU, the AMF, and the OAM) may obtain or autonomously configure related information of the set of first CU-CPs.

Specifically, the related information of the set of first CU-CPs may be preconfigured by the OAM or the AMF for the first CU-CP. Alternatively, the related information of the set of first CU-CPs may be sent by the first CU-CP to the AMF, the DU, or the first CU-UP.

It should be noted that the related information of the set of first CU-CPs includes but is not limited to at least one of the following:
(1) an ID of the set of first CU-CPs (which may be a CU-CP pool/set ID);
(2) name information of a CU-CP included in the set of first CU-CPs, or specifically, name list information of the CU-CP;
(3) internet protocol (internet protocol, IP) address information of a CU-CP included in the set of first CU-CPs, or more specifically, IP address list information of the CU-CP;
(4) identification information of a CU-CP included in the set of first CU-CPs, or specifically, identification list information of the CU-CP; and
(5) priority information of a CU-CP included in the set of first CU-CPs.

It should be noted that when different network elements or units determine the second CU-CP, cooperation of another network element or unit is required. After determining the second CU-CP, the different network elements or units may indicate the second CU-CP to the another network element or unit, to facilitate subsequent interaction between the another network element or unit and the second CU-CP.

For example, when the first CU-CP determines the second CU-CP from the set of first CU-CPs, the first CU-CP may obtain the related information of the set of first CU-CPs from the AMF, or may obtain the related information of the set of first CU-CPs through an OAM preconfiguration. After obtaining the related information of the set of first CU-CPs, the first CU-CP may determine the second CU-CP from the set of first CU-CPs based on the related information of the set of first CU-CPs.

After the first CU-CP determines the second CU-CP, the first CU-CP may send third indication information to the DU and/or the first CU-UP, where the third indication information indicates the second CU-CP, to facilitate subsequent interaction between the DU and/or the first CU-UP and the second CU-CP.

Specifically, the third indication information indicates to the DU and/or the first CU-UP that the second CU-CP is a backup of the first CU-CP. For example, the third indication information may indicate the second CU-CP in a form of an identifier of the second CU-CP, IP address information of the second CU-CP, name information of the second CU-CP, or the like.

For another example, when the DU and/or the first CU-UP determine/determines the second CU-CP, the first CU-CP may obtain the related information of the set of first CU-CPs from the AMF, or may obtain the related information of the set of first CU-CPs through the OAM preconfiguration. The first CU-CP may send fourth indication information to the DU and/or the first CU-UP, where the fourth indication information indicates the set of first CU-CPs. Specifically, the fourth indication information indicates the related information of the set of first CU-CPs, so that the DU and/or the first CU-CP determine/determines the second CU-CP from the set of first CU-CPs. After obtaining the related information of the set of first CU-CPs, the DU and/or the first CU-UP may determine the second CU-CP from the set of first CU-CPs based on the related information of the set of first CU-CPs.

After determining the second CU-CP, the DU and/or the first CU-UP may send feedback information to the first CU-CP, where the feedback information indicates the second CU-CP, to facilitate subsequent interaction between the first CU-CP and the second CU-CP.

For another example, when the AMF determines the second CU-CP from the set of first CU-CPs, the AMF may autonomously configure the related information of the set of first CU-CPs and determine the second CU-CP based on the related information of the set of first CU-CPs. Alternatively, the AMF may obtain, from the first CU-CP, the related information of the set of first CU-CPs preconfigured by the OAM and determine the second CU-CP based on the related information of the set of first CU-CPs.

When the foregoing different network elements or units determine the second CU-CP based on the related information of the set of first CU-CPs, specifically, a CU-CP with a highest priority in the set of first CU-CPs may be determined as the second CU-CP based on priority information of the CU-CP in the related information of the set of first CU-CPs. When a CU-CP with the highest priority cannot be used as the second CU-CP to provide a service, a CU-CP with a second highest priority may be selected as the second CU-CP, and the second CU-CP is determined by analogy.

Optionally, when the foregoing different network elements or units determine the second CU-CP based on the related information of the set of first CU-CPs, a backup service request related to the DU and/or the first CU-UP may be sent to one or more CU-CPs in the set of first CU-CPs, to determine a CU-CP that can serve the DU and/or the first CU-UP as the second CU-CP.

For example, the backup service request may include related information of the DU and/or the first CU-UP, for example, identification information of the DU or the first CU-UP, list information of a cell served by the DU, or resource configuration information related to the DU and/or the first CU-UP. One or more CU-CPs in the set of first CU-CPs may determine, based on information, for example, the backup service request and load of the one or more CU-CPs, whether the one or more CU-CPs can serve as a backup of the first CU-CP to serve the DU and/or the first CU-UP. When the one or more CU-CPs in the set of first CU-CPs determine, based on the information, for example, the backup service request and the load of the one or more CU-CPs, that the one or more CU-CPs may serve the DU and/or the first CU-UP, the one or more CU-CPs may send acknowledgment information to the different network elements or units, to confirm that the one or more CU-CPs may be used as a backup of the first CU-CP, or confirm that the one or more CU-CPs may serve the DU and/or the first CU-UP. It should be understood that the process may be understood as a handover preparation procedure.

The different network elements or units may select one CU-CP from the one or more CU-CPs as the second CU-CP based on the acknowledgment information.

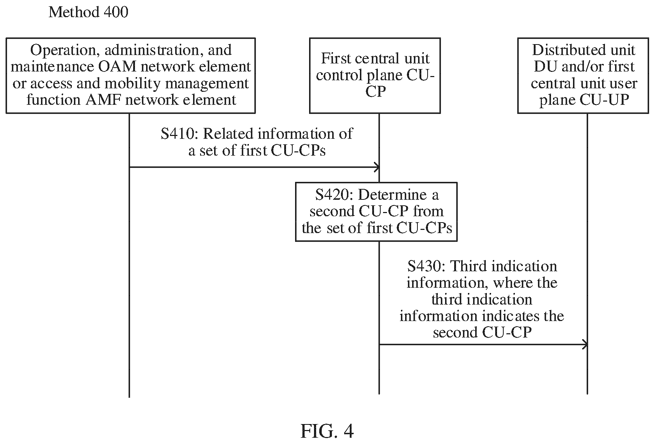

FIG. 4 is a diagram of an embodiment in which a first CU-CP determines a second CU-CP from a set of first CU-CPs and notifies a DU and/or a first CU-UP according to this application. As shown in FIG. 4, the method 400 is a case of the foregoing method steps listed for ease of understanding by a reader. The procedure 400 includes the following steps:

It should be noted that, in the figure, a first CU-CP, a second CU-CP, a DU, or a first CU-UP is used as an execution body. In this embodiment of this application, for example, the execution body may be the second CU-CP, a chip that performs a function of the second CU-CP, a processor that performs a function of the second CU-CP, or software or a logical module that performs a function of the second CU-CP. This is not limited in this application.

S410: The first CU-CP obtains related information of a set of first CU-CPs from an OAM or an AMF.

S420: The first CU-CP determines the second CU-CP from the set of first CU-CPs.

Specifically, the first CU-CP determines, based on the related information of the set of first CU-CPs, the second CU-CP from the set of first CU-CPs.

Optionally, that the first CU-CP determines the second CU-CP from the set of first CU-CPs in S420 is determining the second CU-CP based on priority information.

Optionally, that the first CU-CP determines the second CU-CP from the set of first CU-CPs in S420 may include a procedure in which the first CU-CP sends a backup service request to one or more CU-CPs in the set of first CU-CPs, and the like.

S430: The first CU-CP sends third indication information to the DU and/or the first CU-UP, where the third indication information indicates the second CU-CP.

A procedure of determining, by the first CU-CP, the second CU-CP and notifying the DU and/or the first CU-UP may be completed before the DU and/or the first CU-CP have/has a requirement for establishing communication with the second CU-CP through a communication interface.

Optionally, after receiving the third indication information, the DU and/or the first CU-UP may send a communication interface establishment request to the second CU-CP in advance. After the communication interface is established, the DU and/or the first CU-UP may send a standby indication to the second CU-CP, so that the communication interface is in a standby state.

It should be understood that the standby communication interface may be activated by the DU and/or the first CU-UP, or may be activated by the second CU-CP.

Optionally, after receiving the third indication information, the DU and/or the first CU-UP may send a communication interface establishment request to the second CU-CP after having a requirement for establishing communication with the second CU-CP through the communication interface, and communicate with the second CU-CP through the communication interface after the communication interface is established.

The procedure of determining, by the first CU-CP, the second CU-CP and notifying the DU and/or the first CU-UP may be completed when the DU and/or the first CU-CP have/has a requirement for establishing communication with the second CU-CP through the communication interface.

After receiving the third indication information, the DU and/or the first CU-UP send/sends a communication interface establishment request to the second CU-CP, and communicate/communicates with the second CU-CP through the communication interface after the communication interface is established.

In S310, the first message received by the second CU-CP may include state value information from the first CU-CP.

The state value information may be load value information of the first CU-CP. Specifically, the second CU-CP may determine, based on a relationship between the load value information and a first threshold, whether the first CU-CP is overloaded. If the load value information is greater than or equal to the first threshold, the second CU-CP may determine that the first CU-CP is overloaded. When the second CU-CP determines, based on the load value information, that the first CU-CP is overloaded, the second CU-CP may communicate with the DU and/or the first CU-UP through the communication interface.

It should be understood that when the first CU-CP is overloaded, the first CU-CP may still communicate with another network element or unit through the communication interface.

The state value information may be state value information for determining whether the first CU-CP is faulty. When the state value information is abnormal, the second CU-CP determines that the first CU-CP is faulty. When determining that the first CU-CP is faulty, the second CU-CP may communicate with the DU and/or the first CU-UP through the communication interface.

For example, that the state value information is abnormal may be that the second CU-CP does not receive the state value information from the first CU-CP within a second periodicity or after a preset timer expires. For another example, that a state value is abnormal may be that the state value is an error value.

In another embodiment, the second CU-CP may determine, by detecting a transport layer state of the communication interface between the second CU-CP and the first CU-CP, whether the first CU-CP is faulty, without receiving the state value information. Optionally, when the transport layer state of the communication interface is abnormal, the second CU-CP determines that the first CU-CP is faulty. When determining that the first CU-CP is faulty, the second CU-CP may communicate with the DU and/or the first CU-UP through the communication interface.

In S310, the first message received by the second CU-CP includes first indication information from the first CU-CP, and the first indication information indicates that the first CU-CP is overloaded. Optionally, the second CU-CP may communicate with the DU and/or the first CU-UP based on the first indication information through the communication interface.

Before sending the first indication information, the first CU-CP may first determine that the first CU-CP is overloaded.

Optionally, that the first CU-CP determines that the first CU-CP is overloaded may be: the first CU-CP determines, based on that the load value information of the first CU-CP is greater than or equal to a first threshold, that the first CU-CP is overloaded.

In S310, the first message received by the second CU-CP includes seventh indication information from the AMF, and the seventh indication information may indicate that the first CU-CP is overloaded or faulty, or the seventh indication information may indicate the second CU-CP to communicate with the DU and/or the first CU-UP through the communication interface.

Before sending the seventh indication information, the AMF may first determine that the first CU-CP is overloaded or faulty.

Specifically, the AMF may obtain the state value information of the first CU-CP from the first CU-CP periodically or in real time. The state value information may reflect whether the first CU-CP is overloaded or faulty. The AMF determines, based on the state value information, whether the first CU-CP is overloaded or faulty. If the AMF determines that the first CU-CP is overloaded or faulty, the AMF sends the seventh indication information to the second CU-CP.

In comparison with determining whether the first CU-CP is overloaded by another network element or unit such as the AMF, determining whether the first CU-CP is overloaded by the first CU-CP can reduce signaling overheads caused by transmitting load value information and indication information. In addition, that the first CU-CP determines whether the first CU-CP is overloaded can reduce a determining error caused by a packet loss or the like, and improve stability and accuracy of a determining result.

In S310, the first message received by the second CU-CP includes second indication information from the first CU-CP, and the second indication information indicates the second CU-CP to communicate with the DU and/or the first CU-UP through the communication interface.

It should be noted that a cause for sending the second indication information by the first CU-CP may be that the first CU-CP determines that the first CU-CP is overloaded, or may be that the first CU-CP receives the indication information sent by the AMF, the DU, or the first CU-UP. Optionally, the instruction information indicates the first CU-CP to migrate the DU and/or the first CU-UP, in other words, indicates the DU and/or the first CU-UP to communicate with a backup second CU-CP through the communication interface. It should be noted that a cause for sending the indication information by the AMF, the DU, or the first CU-UP may be that the AMF, the DU, or the first CU-UP determines that the first CU-CP is overloaded, or may be another cause. This is not limited in embodiments of this application.

In S310, the first message received by the second CU-CP includes first request information from the DU and/or the first CU-UP, and the first request information is for requesting to communicate with the second CU-CP through the communication interface. The first request information may be a communication interface establishment request or a communication interface activation request.

This embodiment of this application may further include: The DU and/or the first CU-UP receives a second message, and sends the first request information to the second CU-CP based on the second message.

The second message received by the DU and/or the first CU-UP may include the state value information from the first CU-CP. Description of the state value information is similar to the foregoing description, and details are not described herein again. Specifically, the DU and/or the first CU-UP may determine, based on the state value information, that the first CU-CP is overloaded or faulty, and determine, based on that the first CU-CP is overloaded or faulty, to communicate with the second CU-CP through the communication interface, to send the first request information to the second CU-CP.

The second message received by the DU and/or the first CU-UP includes fifth indication information from the first CU-CP, and the fifth indication information indicates that the first CU-CP is overloaded. The DU and/or the first CU-UP determine/determines, based on the fifth indication information, to communicate with the second CU-CP through the communication interface, to send the first request information to the second CU-CP.

Before sending the fifth indication information, the first CU-CP may first determine that the first CU-CP is overloaded. A procedure in which the first CU-CP determines that the first CU-CP is overloaded is similar to the foregoing procedure, and details are not described herein again.

It should be supplemented that that the first CU-CP determines that the first CU-CP is overloaded may also include: receiving indication information from the second CU-CP, where the indication information indicates that the first CU-CP is overloaded. A procedure in which the second CU-CP determines that the first CU-CP is overloaded is similar to a procedure in which the AMF determines that the first CU-CP is overloaded, and details are not described herein again.

In comparison with a solution in which the second CU-CP sends the indication information to the first CU-CP to indicate that the first CU-CP is overloaded after the second CU-CP obtains the state value information of the first CU-CP and determines that the first CU-CP is overloaded, and then the first CU-CP indicates, to another network element or unit, that the first CU-CP is overloaded, this solution in which the second CU-CP obtains the state value information of the first CU-CP, determines that the first CU-CP is overloaded, and communicates, through the communication interface, with the DU and/or the first CU-UP based on that the first CU-CP is overloaded can reduce more signaling overheads, simplify a procedure, reduce a probability of a packet loss error caused by sending the indication information for multiple times, and improve system stability.

The second message received by the DU and/or the first CU-UP includes sixth indication information, and the sixth indication information indicates the DU and/or the first CU-UP to communicate with the second CU-CP through the communication interface. The DU and/or the first CU-UP determine/determines, based on the sixth indication information, to communicate with the second CU-CP through the communication interface, to send the first request information to the second CU-CP.

The sixth indication information may be sent by the first CU-CP to the DU and/or the first CU-UP after the first CU-CP determines that the first CU-CP is overloaded. A procedure in which the first CU-CP determines that the first CU-CP is overloaded is similar to the foregoing procedure, and details are not described herein again.

In another embodiment, the DU and/or the first CU-UP may not receive the second message, and send the first request information to the second CU-CP when determining that software update time of the first CU-CP exceeds first time.

When the first CU-CP updates software, the first CU-CP may perform the following steps:

For example, the first CU-CP sends transport network layer association (Transport Network Layer Association, TNLA) release request (release request) information to the DU, where the information indicates to release TNLA of an F1-C interface between the first CU-CP and the DU. The DU releases the TNLA based on the information.

For another example, the first CU-CP sends the TNLA release request information to the first CU-UP, where the information indicates to release TNLA of an E1 interface between the first CU-CP and the first CU-UP. The first CU-UP releases the TNLA based on the indication.

For another example, the first CU-CP sends the TNLA release request information to the AMF, where the information indicates to release TNLA of an NG (next generation) interface between the first CU-CP and the AMF. The AMF releases the TNLA according to instructions.

Optionally, before the second CU-CP receives or sends a message (for example, receives the first message), the second CU-CP receives indication information, and the indication information indicates that the second CU-CP is a backup of the first CU-CP.

For example, when the second CU-CP needs to determine whether the first CU-CP is overloaded or faulty, the second CU-CP needs to first determine that the second CU-CP is the backup of the first CU-CP. For example, the indication information may be sent, to the second CU-CP, by a unit or a network element that determines the second CU-CP. Optionally, the indication information may alternatively be forwarded, to the second CU-CP through another unit or network element, by the unit or network element that determines the second CU-CP.

Optionally, when the first CU-CP is overloaded, the DU and/or the first CU-UP may migrate, to the second CU-CP, services of some terminal devices served by the DU and/or the first CU-UP. In other words, the DU and/or the first CU-UP may communicate with both the first CU-CP and the second CU-CP through the communication interface.

The DU and/or the first CU-UP are/is connected to multiple CU-CPs at the same time, so that the CU-CP is less overloaded because services of the DU and/or the first CU-UP are on a same CU-CP, and a backup CU-CP can be more flexibly used to share the service, to reduce a system fault probability and improve network stability.

S320: Receive context information from the first CU-CP.

In this embodiment of this application, an execution body may be the second CU-CP, a chip that performs a function of the second CU-CP, a processor that performs a function of the second CU-CP, software or a logical module that performs a function of the second CU-CP, or the like. This is not limited in this application. It should be noted that a sequence of steps S310 and S320 is not limited.

The context information may include context information of the DU and/or the first CU-UP. Optionally, the context information may include context information of at least one terminal device served by the first CU-CP.

In an embodiment, the first CU-CP may directly send the context information to the second CU-CP. In other words, when the first CU-CP is not faulty or overloaded, the first CU-CP may send the context information to the second CU-CP.

Specifically, the first CU-CP may send the context information to the second CU-CP every third periodicity. Alternatively, the first CU-CP may send the context information to the second CU-CP in real time when the context information changes.

In another embodiment, the second CU-CP may receive the context information from the first CU-CP through a core network element. The core network element may be the AMF. Optionally, the core network element may be a newly introduced network element.

For example, when the first CU-CP is not overloaded or faulty, the first CU-CP may send the context information to the core network element for storage. The first CU-CP may send the context information to the core network element every third periodicity. Alternatively, the first CU-CP may send the context information to the core network element in real time when the context information changes.

Further, when sending the context information to the core network element for storage, the first CU-CP may include an identifier of the first CU-CP and/or an identifier of a terminal device served by the first CU-CP in the context information, so that the AMF can mark the context information.

The identifier of the first CU-CP is used to identify the context information related to the first CU-CP, that is, the context information of the DU and/or the first CU-UP. The identifier of the terminal device is used to identify context information related to a terminal device.

For example, the identifier of the first CU-CP may be a globally unique RAN node identifier (globally unique RAN node ID), and the identifier of the terminal device may be a RAN UE NGAP identifier (RAN UE NGAP (next generation application protocol, NG interface application protocol) ID).

When the second CU-CP serves as a backup of the first CU-CP and needs to communicate with the DU and/or the first CU-UP through the communication interface, the second CU-CP may obtain the context information from the core network element.

Optionally, when obtaining the context information from the core network element, the second CU-CP may send the identifier of the first CU-CP to the AMF, and the AMF determines the context information of the first CU-CP based on the identifier of the first CU-CP, and sends the context information of the first CU-CP to the second CU-CP.

Optionally, when obtaining the context information from the core network element, the second CU-CP may send an identifier of a terminal device to the AMF, and the AMF determines context information of the terminal device based on the identifier of the terminal device, and sends the context information of the terminal device to the second CU-CP.

In addition, the AMF may actively send the context information to the second CU-CP. For example, when detecting that the first CU-CP is faulty or overloaded, the AMF may send the context information to the second CU-CP. Optionally, the context information may further include the identifier of the first CU-CP or the identifier of the terminal device, and is used by the AMF to mark the context information when the AMF sends a downlink NGAP message to the second CU-CP, so that the second CU-CP learns that the context information is a context of the first CU-CP and/or context information of a terminal device served by the first CU-CP.

Optionally, when the AMF sends the context information to the second CU-CP, the context information may further include a newly allocated RAN UE NGAP ID, used for marking the terminal device when the second CU-CP or the AMF subsequently sends a message related to the terminal device on the NG interface.

In comparison with that the first CU-CP sends the context information to the second CU-CP in real time or periodically, the method in which the first CU-CP stores the context information in the core network element can reduce impact on the second CU-CP before the first CU-CP is faulty or overloaded, so that a working state of the second CU-CP is not affected before the second CU-CP serves as a backup of the first CU-CP to communicate with the DU and/or the first CU-UP through the communication interface, and unnecessary signaling overheads of the first CU-CP or the second CU-CP are reduced.

For example, after the second CU-CP communicates with the DU through the communication interface, when the second CU-CP sends an F1AP (F1 application protocol, F1 interface application protocol) message (for example, a terminal device context modification request UE CONTEXT MODIFICATION REQUEST message) to the DU through an F1 communication interface, the second CU-CP may configure, for a terminal device served by the second CU-CP, a new UE F1AP ID (for example, a gNB-CU-CP UE F1AP ID) used in the second CU-CP. The configuration process may be as follows: When the second CU-CP sends an F1AP message to the DU, the F1AP message may carry an old UE F1AP ID used by the DU to send information to the first CU-CP through the F1 interface and a new UE F1AP ID used by the DU to send information to the second CU-CP through the F1 interface. The DU may replace the old UE F1AP ID with the new UE F1AP ID based on the F1AP message.

Optionally, if the DU does not sense the second CU-CP, in other words, the DU does not sense which CU-CP serves as a backup for the second CU-CP (for example, the second CU-CP is determined by the first CU-CP, but the first CU-CP does not send third indication information to the DU, to indicate the second CU-CP to the DU), the DU may determine, based on the new UE F1AP ID, which communication interface is used for sending the F1AP message or which communication interface is used for communicating with the second CU-CP. In other words, the DU may determine the second CU-CP through the new UE F1AP ID.

For example, after the second CU-CP communicate with the first CU-UP through the communication interface, when the second CU-CP sends an E1AP (E1 application protocol, E1 interface application protocol) message to the first CU-UP through an E1 communication interface, the second CU-CP may configure, for a terminal device served by the second CU-CP, a new UE E1AP ID (for example, a gNB-CU-CP UE E1AP ID) used in the second CU-CP. The configuration process may be as follows: When the second CU-CP sends the E1AP message to the first CU-UP, the E1AP message may carry an old UE E1AP ID used when the first CU-UP and the first CU-CP send information through the E1 interface and the new UE E1AP ID used when the first CU-UP and the second CU-CP send information through the E1 interface. The first CU-UP may replace the old UE E1AP ID with the new UE E1AP ID based on the F1AP message.

Optionally, if the first CU-UP does not sense the second CU-CP, in other words, the first CU-UP does not sense which CU-CP serves as a backup for the first CU-UP (for example, the second CU-CP is determined by the first CU-CP, but the first CU-CP does not send the third indication information to the first CU-UP, to indicate the first CU-UP to the second CU-CP), the first CU-UP may determine, based on the new UE E1AP ID, which communication interface is used for sending the E1AP message or which communication interface is used for communicating with the second CU-CP. In other words, the first CU-UP may determine the second CU-CP through the new UE E1AP ID.

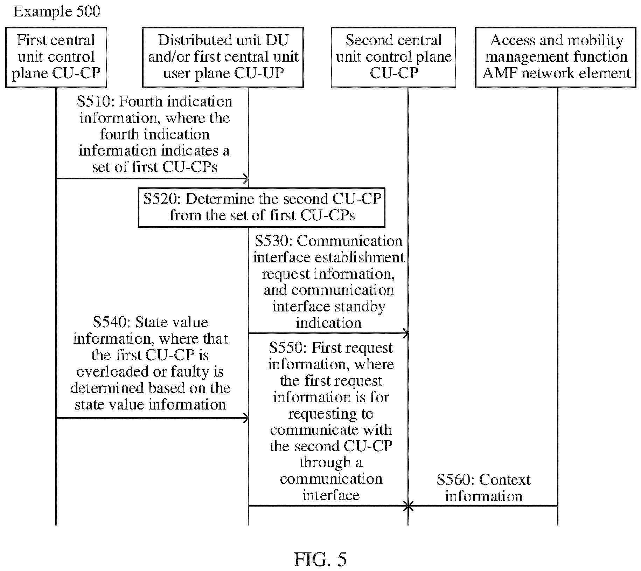

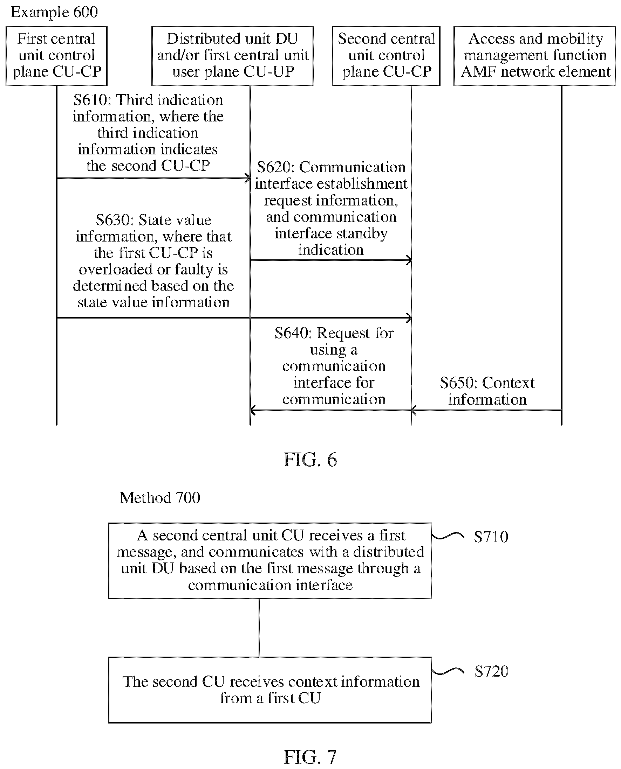

The following describes, by using FIG. 5 and FIG. 6, an example of a procedure of a communication method provided in embodiments of this application. It should be understood that the procedures shown in FIG. 5 and FIG. 6 are merely several specific examples of the foregoing method embodiments, and do not constitute any limitation on embodiments of this application.

FIG. 5 shows an example communication method according to an embodiment of this application. As shown in FIG. 5, the example 500 includes the following steps:

It should be noted that, in the figure, a first CU-CP, a second CU-CP, a DU, or a first CU-UP is used as an execution body. In this embodiment of this application, for example, the execution body may be the second CU-CP, a chip that performs a function of the second CU-CP, a processor that performs a function of the second CU-CP, or software or a logical module that performs a function of the second CU-CP. This is not limited in this application. S510: The DU and/or the first CU-UP receive/receives fourth indication information from the first CU-CP, where the fourth indication information indicates a set of first CU-CPs.

Specifically, for obtaining and transferring related information of the set of first CU-CPs, refer to step S310. Details are not described herein again.

S520: The DU and/or the first CU-UP determine/determines the second CU-CP from the set of first CU-CPs.

Specifically, for a method step of determining, by the DU and/or the first CU-UP, the second CU-CP from the first CU-CP, refer to step S310. Details are not described herein again.

Optionally, after determining the second CU-CP from the set of first CU-CPs, the DU and/or the first CU-UP send/sends feedback information to the first CU-CP, where the feedback information indicates the second CU-CP, so that the first CU-CP performs subsequent interaction after determining the second CU-CP.

S530: The DU and/or the first CU-UP send/sends communication interface establishment request information to the second CU-CP, and further send/sends a communication interface standby indication to the second CU-CP.

Correspondingly, the second CU-CP receives the communication interface establishment request information, and sends a response message of the communication interface establishment request information to the DU and/or the first CU-UP.

Correspondingly, the second CU-CP receives the communication interface standby indication, and temporarily does not communicate with the DU and/or the first CU-UP based on the standby indication through the communication interface.

S540: The DU and/or the first CP-UP receive/receives state value information from the first CU-CP, and determine/determines, based on the state value information, that the first CU-CP is overloaded or faulty.

Specifically, for related descriptions of the state value information, refer to step S310. Details are not described herein again.

S550: The DU and/or the first CU-UP send/sends first request information to the second CU-CP based on that the first CU-CP is overloaded or faulty.

Specifically, the first request information is for requesting to communicate with the second CU-CP through the communication interface.

Specifically, the communication interface used for communication is an activated standby communication interface.

S560: The second CU-CP receives context information from an AMF.

It should be noted that the context information may be context information of the DU and/or the first CU-UP, or may be context information of a terminal device served by the first CU-CP. For a description of the context information, refer to step S320. Details are not described herein again.

Before sending the context information to the second CU-CP, the AMF may determine, from indication information of another network element or unit, that the second CU-CP is a backup of the first CU-CP, or may determine by itself that the second CU-CP is a backup of the first CU-CP.

It should be noted that step S560 may occur before any one of steps S510 to S550. This is not limited herein. For details, refer to related limitations in S320.

It should be noted that the second CU-CP may also directly receive the context information from the first CU-CP. For details, refer to the description in step S320. The example 500 is merely an example, and constitutes no limitation on the method 300.

FIG. 6 shows another example communication method according to an embodiment of this application. As shown in FIG. 6, the example 600 includes the following steps:
It should be noted that, in the figure, a first CU-CP, a second CU-CP, a DU, or a first CU-UP is used as an execution body. In this embodiment of this application, for example, the execution body may be the second CU-CP, a chip that performs a function of the second CU-CP, a processor that performs a function of the second CU-CP, or software or a logical module that performs a function of the second CU-CP. This is not limited in this application.

S610: The DU and/or the first CU-UP receive/receives third indication information from the first CU-CP, and determines the second CU-CP based on the third indication information, where the third indication information indicates the second CU-CP.

It should be noted that the second CU-CP is determined by the first CU-CP from a set of first CU-CPs.

It should be noted that for related descriptions of the set of first CU-CPs and how to determine the second CU-CP from the set of first CU-CPs, refer to step S310. Details are not described herein again.

S620: The DU and/or the first CU-UP send/sends communication interface establishment request information to the second CU-CP, and further sends a communication interface standby indication to the second CU-CP.

Correspondingly, the second CU-CP receives the communication interface establishment request information, and sends a response message of the communication interface establishment request information to the DU and/or the first CU-UP.

Correspondingly, the second CU-CP receives the communication interface standby indication, and temporarily does not communicate with the DU and/or the first CU-UP based on the standby indication through the communication interface.

S630: The second CU-CP receives state value information from the first CU-CP, and determines, based on the state value information, that the first CU-CP is overloaded or faulty.

Specifically, for related descriptions of the state value information, refer to step S310. Details are not described herein again.

S640: The second CU-CP sends, to the DU and/or the first CU-UP based on that the first CU-CP is overloaded or faulty, a request for using a communication interface for communication.

It should be noted that the request for using the communication interface for communication is to activate a standby communication interface.

S650: The second CU-CP receives context information from the AMF.

It should be noted that the context information may be context information of the DU and/or the first CU-UP. For a description of the context information, refer to step S320. Details are not described herein again.

It should be noted that step S650 may occur before any one of steps S610 to S640. This is not limited herein. For details, refer to related limitations in S320.

It should be noted that the second CU-CP may also directly receive the context information from the first CU-CP. For details, refer to the description in step S320. The example 600 is merely an example, and constitutes no limitation on the method 300.

According to the method provided in this embodiment of this application, a backup is provided for the first CU-CP, so that when the first CU-CP is faulty, overloaded, or the like, the DU and/or the first CU-UP can communicate, through the communication interface, with the second CU-CP used as a backup. This reduces service interruption of a corresponding terminal device, and improve system robustness.

FIG. 7 shows another example communication method according to an embodiment of this application. As shown in FIG. 7, the method is applied to a CU-DU separated architecture, and the method 700 includes the following steps.

S710: Receive a first message, and communicate with a DU based on the first message through a communication interface.

It should be noted that an execution body may be a second CU, a chip that performs a function of the second CU, a processor that performs a function of the second CU, software or a logical module that performs a function of the second CU, or the like. This is not limited in this application.

It should be noted that this step is similar to step S310 in the method 300, provided that a second CU-CP is replaced with the second CU, a first CU-CP is replaced with a first CU, and a DU and/or a first CU-UP are/is replaced with the DU. For this step, refer to step S310 in the method 300. Details are not described herein again.

S720: Receive context information from the first CU.

It should be noted that the execution body may be the second CU, the chip that performs the function of the second CU, the processor that performs the function of the second CU, the software or the logical module that performs the function of the second CU, or the like. This is not limited in this application.

It should be noted that a sequence of step S720 and step S710 may be replaced.

It should be noted that this step is similar to step S320 in the method 300, provided that the second CU-CP is replaced with the second CU, the first CU-CP is replaced with the first CU, and the DU and/or the first CU-UP are/is replaced with the DU. For this step, refer to step S320 in the method 300. Details are not described herein again.

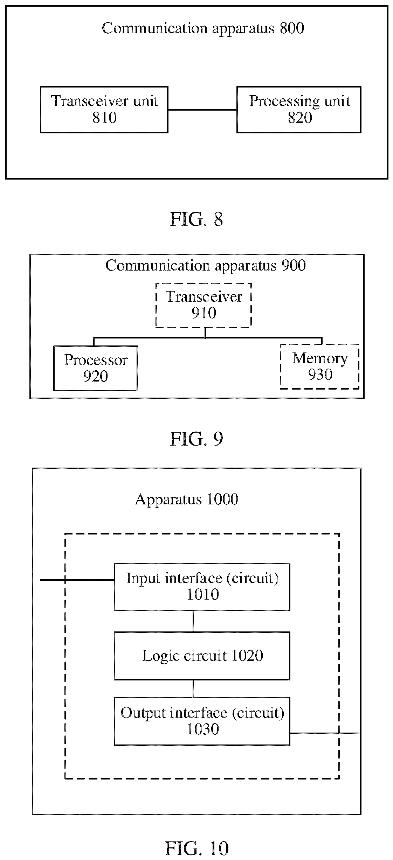

According to the method provided in this embodiment of this application, a backup is provided for the first CU. When the first CU is faulty, overloaded, or the like, the DU can communicate, through the communication interface, with the second CU used as a backup of the first CU. This reduces service interruption of a corresponding terminal device and improves system robustness. FIG. 8 shows an example communication apparatus according to an embodiment of this application. As shown in FIG. 8, the communication apparatus 800 includes a transceiver unit 810 and a processing unit 820.

In some embodiments, the communication apparatus 800 may be configured to implement a function of a second CU-CP in any one of the foregoing methods. For example, the communication apparatus 800 may correspond to the second CU-CP.

The communication apparatus 800 may be the second CU-CP, and performs the steps performed by the second CU-CP in the foregoing method embodiments. The transceiver unit 810 may be configured to support the communication apparatus 800 in performing communication, for example, performing a sending action and/or a receiving action performed by the second CU-CP in the foregoing method embodiments. The processing unit 820 may be configured to support the communication apparatus 800 in performing a processing action in the foregoing method embodiments, for example, performing a processing action performed by the second CU-CP in the foregoing method embodiments.

Optionally, the communication apparatus may further include a storage unit 830 (not shown in FIG. 8), configured to store program code and data of the communication apparatus.

For details, refer to the following descriptions.

The transceiver unit 810 is configured to receive context information from a first central unit control plane CU-CP, where the context information includes a context of a distributed unit DU and/or a context of a first central unit user plane CU-UP, and the context information is used by the second CU-CP to communicate with the DU and/or the first CU-UP.

The transceiver unit 810 is further configured to receive a first message.

The processing unit 820 is configured to communicate with the DU and/or the first CU-UP based on the first message through a communication interface.

Receiving, by the transceiver unit 810, the context information from the first CU-CP may be receiving the context information from the first CU-CP via an access and mobility management function network element AMF.

The first CU-CP may send the context information to the AMF periodically or in real time.

The first message may include state value information from the first CU-CP. That the processing unit 820 communicates with the DU and/or the first CU-UP based on the first message through the communication interface includes: The processing unit 820 determines, based on the state value information, that the first CU-CP is overloaded or faulty; the processing unit 820 determines, based on that the first CU-CP is overloaded or faulty, to communicate with the DU and/or the first CU-UP through the communication interface; and the processing unit 820 communicates with the DU and/or the first CU-UP through the communication interface.

The state value information may be information reflecting a load value of the first CU-CP. For example, that the load value information is greater than a first threshold indicates that the first CU-CP is overloaded.

The state value information may be information reflecting whether the first CU-CP is faulty. For example, that the state value information is an error value indicates that the first CU-CP is faulty. For another example, that the state value information is null indicates that the first CU-CP is faulty.

The first message may include first request information from the DU and/or the first CU-UP. The first request information is for requesting to communicate with the second CU-CP through the communication interface. That the processing unit 820 communicates with the DU and/or the first CU-UP based on the first message through the communication interface includes: The processing unit 820 communicates with the DU and/or the first CU-UP based on the first request information through the communication interface.

The first message includes first indication information from the first CU-CP, and the first indication information indicates that the first CU-CP is overloaded. That the processing unit 820 communicates with the DU and/or the first CU-UP based on the first message through the communication interface includes: The processing unit 820 determines, based on the first indication information, to communicate with the DU and/or the first CU-UP through the communication interface; and the processing unit 820 communicates with the DU and/or the first CU-UP through the communication interface.

It should be noted that the first indication information may be sent by the first CU-CP after the first CU-CP determines that the first CU-CP is overloaded, or may be sent by the first CU-CP as indicated by another network element or unit after the another network element or unit determines that the first CU-CP is overloaded.

The first message includes second indication information from the first CU-CP, and the second indication information indicates the processing unit 820 to communicate with the DU and/or the first CU-UP through the communication interface. That the processing unit 820 communicates with the DU and/or the first CU-UP based on the first message through the communication interface includes: The processing unit 820 communicates with the DU and/or the first CU-UP based on the second indication information through the communication interface.

It should be noted that the second indication information may be sent by the first CU-CP after the first CU-CP determines that the first CU-CP is overloaded and determines to indicate the processing unit 820 to communicate with the DU and/or the first CU-UP through the communication interface, or may be sent by another network element to the first CU-CP and forwarded by the first CU-CP after the another network element determines that the first CU-CP is overloaded and determines to indicate the processing unit 820 to communicate with the DU and/or the first CU-UP through the communication interface.

It should be noted that performing communication through the communication interface may be establishing a communication interface and performing communication through the communication interface, or may be activating a standby communication interface.

In some embodiments, the communication apparatus 800 may be configured to implement a function of the first CU-CP in any one of the foregoing methods. For example, the communication apparatus 800 may correspond to the first CU-CP.

The communication apparatus 800 may be the first CU-CP, and performs the steps performed by the first CU-CP in the foregoing method embodiments. The transceiver unit 810 may be configured to support the communication apparatus 800 in performing communication, for example, performing a sending action and/or a receiving action performed by the first CU-CP in the foregoing method embodiments. The processing unit 820 may be configured to support the communication apparatus 800 in performing a processing action in the foregoing method embodiments, for example, performing a processing action performed by the first CU-CP in the foregoing method embodiments.

Optionally, the communication apparatus may further include a storage unit 830 (not shown in FIG. 8), configured to store program code and data of the communication apparatus.

For details, refer to the following descriptions.

The transceiver unit 810 is configured to send context information to a second central unit control plane CU-CP, where the context information includes a context of a distributed unit DU and a context of a first central unit user plane CU-CP, and the context information is used by the second CU-CP to communicate with the DU and/or the first CU-UP.

The processing unit 820 is configured to determine the second CU-CP from a set of first CU-CPs, where the set of first CU-CPs includes the first CU-CP, and any two CU-CPs in the set of first CU-CPs support mutual backup.

The transceiver unit 810 is further configured to send third indication information to the DU and/or the first CU-UP, where the third indication information indicates the second CU-CP.

The transceiver unit 810 is further configured to send fourth indication information to the DU and/or the first CU-UP, where the fourth indication information indicates the set of first CU-CPs, the set of first CU-CPs includes the first CU-CP and the second CU-CP, and the any two CU-CPs in the set of first CU-CPs support mutual backup. The transceiver unit 810 is further configured to receive feedback information of the DU or the first CU-UP and determine the second CU-CP. The feedback information indicates the second CU-CP.

The transceiver unit 810 is further configured to send state value information of the first CU-CP to the second CU-CP, where the state value information is for determining that the first CU-CP is overloaded or faulty.

The transceiver unit 810 is further configured to send first indication information to the second CU-CP, where the first indication information indicates that the first CU-CP is overloaded.

The transceiver unit 810 is further configured to send second indication information to the second CU-CP, where the second indication information indicates the second CU-CP to communicate with the DU and/or the first CU-UP through the communication interface.

Before the transceiver unit 810 sends the first indication information or the second indication information to the second CU-CP, the processing unit 820 is further configured to determine, based on that a load value is greater than a first threshold, that the first CU-CP is overloaded.

The transceiver unit 810 is further configured to send fifth indication information to the DU and/or the first CU-UP, where the fifth indication information indicates that the first CU-CP is overloaded.

The transceiver unit 810 is further configured to send sixth indication information to the DU and/or the first CU-UP. The sixth indication information indicates the DU and/or the first CU-UP to communicate with the second CU-CP through the communication interface.

It should be noted that performing communication through the communication interface may be establishing a communication interface and performing communication through the communication interface, or may be activating a standby communication interface.

In some embodiments, the communication apparatus 800 may be configured to implement functions of the DU and/or the first CU-UP in any one of the foregoing methods. For example, the communication apparatus 800 may correspond to the DU and/or the first CU-UP.

The communication apparatus 800 may be the DU and/or the first CU-UP, and performs the steps performed by the DU and/or the first CU-UP in the foregoing method embodiments. The transceiver unit 810 may be configured to support the communication apparatus 800 in performing communication, for example, performing a sending action and/or a receiving action performed by the DU and/or the first CU-UP in the foregoing method embodiments. The processing unit 820 may be configured to support the communication apparatus 800 in performing a processing action in the foregoing method embodiments, for example, performing a processing action performed by the DU and/or the first CU-UP in the foregoing method embodiments.

Optionally, the communication apparatus may further include a storage unit 830 (not shown in FIG. 8), configured to store program code and data of the communication apparatus.

For details, refer to the following descriptions.

The transceiver unit 810 is configured to receive a second message.

The processing unit 820 is configured to determine a second CU-CP.

The transceiver unit 810 is further configured to send first request information to the second CU-CP based on the second message, where the first request information is for requesting to communicate with second CU-CP through a communication interface.

That the processing unit 820 is configured to determine a second CU-CP includes: The transceiver unit 810 is configured to receive third indication information sent by a first CU-CP, and the processing unit 820 is configured to determine the second CU-CP based on the third indication information, where the third indication information indicates the second CU-CP.

That the processing unit 820 is configured to determine a second CU-CP includes: The transceiver unit 810 is configured to receive the fourth indication information sent by the first CU-CP, and the processing unit 820 is configured to determine the second CU-CP from the set of first CU-CPs, where the fourth indication information indicates the set of first CU-CPs, the set of first CU-CPs includes the first CU-CP, and any two CU-CPs in the set of first CU-CPs support mutual backup

The transceiver unit 810 is further configured to send feedback information to the first CU-CP, where the feedback information indicates the second CU-CP.

The second message includes state value information from the first CU-CP, and that the transceiver unit 810 sends the first request information to the second CU-CP based on the second message includes:
The processing unit 820 determines, based on the state value information of the first CU-CP, that the first CU-CP is overloaded or faulty; the processing unit 820 determines, based on that the first CU-CP is overloaded or faulty, to communicate with the second CU-CP through the communication interface; and the transceiver unit 810 sends the first request information to the second CU-CP.

That the second message includes fifth indication information from the first CU-CP, the fifth indication information indicates that the first CU-CP is overloaded, and that the transceiver unit 810 sends the first request information to the second CU-CP based on the third message includes:
The processing unit 820 determines, based on the fifth indication information, to communicate with the second CU-CP through the communication interface; and the transceiver unit 810 sends the first request information to the second CU-CP.

The second message includes sixth indication information, the sixth indication information indicates the DU and/or the first CU-UP to communicate with the second CU-CP, and that the transceiver unit 810 sends the first request information to the second CU-CP based on the third message includes:
The transceiver unit 810 sends the first request information to the second CU-CP based on the sixth indication information.

It should be noted that performing communication through the communication interface may be establishing a communication interface and performing communication through the communication interface, or may be activating a standby communication interface.

FIG. 9 shows an example signal transmission apparatus 900 according to an embodiment of this application. As shown in FIG. 9, the apparatus 900 includes a transceiver 910, a processor 920, and a memory 930. The memory 930 is configured to store instructions. The processor 920 is coupled to the memory 930, and is configured to execute the instructions stored in the memory, to perform the method provided in the foregoing embodiments of this application.

Specifically, the transceiver 910 in the apparatus 900 may correspond to the transceiver unit 810 in the apparatus 800, and the processor 920 in the communication apparatus 900 may correspond to the processing unit 820 in the communication apparatus 800.

It should be understood that the memory 930 and the processor 920 may be integrated into one processing apparatus, and the processor 920 is configured to execute program code stored in the memory 930 to implement the foregoing functions. During specific implementation, the memory 930 may also be integrated into the processor 920, or may be independent of the processor 910.

FIG. 10 is a diagram of still another example communication apparatus according to an embodiment of this application. The communication apparatus may be configured to perform the method performed by the first CU-CP, the second CU-CP, the DU, or the first CU-UP. As shown in FIG. 10, the communication apparatus includes:
at least one input interface (Input(s)) 1010, a logic circuit 1020, and at least one output interface (Output(s)) 1030. Optionally, the logic circuit may be a chip or another integrated circuit that can implement the method in this application.

The input interface 1010 is configured to input or receive data. The output interface 1030 is configured to output or send data. The logic circuit 1020 is configured to perform the foregoing possible methods shown in FIG. 3 to FIG. 7.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus and method may be implemented in other manners. For example, the described apparatus embodiment is merely an example. For example, division into the units is merely logical function division and may be other division in actual implementation. For example, multiple units or components may be combined or integrated into another system, or some features may be ignored or not performed. In addition, displayed or discussed mutual couplings or direct couplings or communication connections may be implemented through some interfaces. Indirect couplings or communication connections between the apparatuses or the units may be implemented in electrical, mechanical, or other forms.

The units described as separate parts may or may not be physically separate, and parts displayed as units may or may not be physical units, may be located in one location, or may be distributed on multiple network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or a part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes: any medium that can store program code, for example, a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, applied to a second central unit control plane CU-CP, comprising:
receiving context information from a first CU-CP, wherein the context information comprises a context of a distributed unit DU and a context of a first central unit user plane CU-UP, and the context information is used by the second CU-CP to communicate with the DU and the first CU-UP;
receiving a first message; and
communicating with the DU and the first CU-UP based on the first message through a communication interface.

2. The method according to claim 1, wherein the receiving context information from a first CU-CP comprises:
receiving the context information from the first CU-CP via an access and mobility management function network element.

3. The method according to claim 1 or 2, wherein the first message comprises state value information from the first CU-CP.

4. The method according to claim 3, wherein the communicating with the DU and the first CU-UP based on the first message through a communication interface comprises:
determining, based on the state value information, that the first CU-CP is overloaded or faulty;
determining, based on that the first CU-CP is overloaded or faulty, to communicate with the DU and the first CU-UP through the communication interface; and
communicating with the DU and the first CU-UP through the communication interface.

5. The method according to claim 1 or 2, wherein the first message comprises first request information from the DU or the first CU-UP, and the first request information is for requesting to communicate with the second CU-CP through the communication interface.

6. The method according to claim 1 or 2, wherein the first message comprises first indication information from the first CU-CP, and the first indication information indicates that the first CU-CP is overloaded.

7. The method according to claim 1 or 2, wherein the first message comprises second indication information from the first CU-CP, and the second indication information indicates to communicate with the DU and the first CU-UP through the communication interface.

8. The method according to any one of claims 1 to 7, wherein performing communication through the communication interface comprises:
establishing a communication interface and performing communication through the communication interface; or
activating a standby communication interface and performing communication through the standby communication interface.

9. A communication method, applied to a first central unit control plane CU-CP, comprising:
sending context information to a second CU-CP, wherein the context information comprises a context of a distributed unit DU and a context of a first central unit user plane CU-UP, and the context information is used by the second CU-CP to communicate with the DU and the first CU-UP.

10. The method according to claim 9, wherein the method further comprises:
determining the second CU-CP from a set of first CU-CPs, wherein the set of first CU-CPs comprises the first CU-CP, and any two CU-CPs in the set of first CU-CPs support mutual backup; and
sending third indication information to the DU and the CU-UP, wherein the third indication information indicates the second CU-CP.

11. The method according to claim 9, wherein the method further comprises:
sending fourth indication information to the DU and the first CU-UP, wherein the fourth indication information indicates a set of first CU-CPs, the set of first CU-CPs comprises the first CU-CP and the second CU-CP, and any two CU-CPs in the set of first CU-CPs support mutual backup; and
receiving feedback information from the DU or the first CU-UP, and determining the second CU-CP based on the feedback information, wherein the feedback information indicates the second CU-CP.

12. The method according to any one of claims 9 to 11, wherein the method further comprises:
sending state value information of the first CU-CP to the second CU-CP, wherein the state value information is for determining that the first CU-CP is overloaded or faulty.

13. The method according to any one of claims 9 to 11, wherein the method further comprises:
sending first indication information to the second CU-CP, wherein the first indication information indicates that the first CU-CP is overloaded.

14. The method according to any one of claims 9 to 11, wherein the method further comprises:
sending second indication information to the second CU-CP, wherein the second indication information indicates the second CU-CP to communicate with the DU and the first CU-UP through a communication interface.

15. The method according to claim 13 or 14, wherein before sending, by the first CU-CP, the first indication information or the second indication information to the second CU-CP, the method further comprises:
determining, by the first CU-CP based on that a load value is greater than a first threshold, that the first CU-CP is overloaded.

16. The method according to any one of claims 9 to 15, wherein performing communication through the communication interface comprises:
establishing a communication interface and performing communication through the communication interface; or
activating a standby communication interface and performing communication through the standby communication interface.

17. A communication method, applied to a distributed unit DU, comprising:
determining a second central unit control plane CU-CP;
receiving a second message; and
sending first request information to the second CU-CP based on the second message, wherein the first request information is for requesting to communicate with the second CU-CP through a communication interface.

18. The method according to claim 17, wherein the determining a second CU-CP further comprises:
receiving third indication information from a first CU-CP, and determining the second CU-CP based on the third indication information, wherein the third indication information indicates the second CU-CP.

19. The method according to claim 17, wherein the determining a second CU-CP further comprises:
receiving fourth indication information from a first CU-CP, and determining the second CU-CP from a set of first CU-CPs, wherein the fourth indication information indicates the set of first CU-CPs, the set of first CU-CPs comprises the first CU-CP, and any two CU-CPs in the set of first CU-CPs support mutual backup.

20. The method according to claim 19, wherein the method further comprises:
sending feedback information to the first CU-CP, wherein the feedback information indicates the second CU-CP.

21. The method according to any one of claims 17 to 19, wherein the second message comprises state value information from the first CU-CP.

22. The method according to claim 21, wherein the sending first request information to the second CU-CP based on the second message comprises:
determining, based on the state value information of the first CU-CP, that the first CU-CP is overloaded or faulty;
determining, based on that the first CU-CP is overloaded or faulty, to communicate with the second CU-CP through the communication interface; and
sending the first request information to the second CU-CP.

23. The method according to any one of claims 17 to 19, wherein the second message comprises fifth indication information from the first CU-CP, and the fifth indication information indicates that the first CU-CP is overloaded.

24. The method according to any one of claims 17 to 19, wherein the second message comprises sixth indication information from the first CU-CP, and the sixth indication information indicates the DU to communicate with the second CU-CP through the communication interface.

25. The method according to any one of claims 17 to 24, wherein performing communication through the communication interface comprises:
establishing a communication interface and performing communication through the communication interface; or
activating a standby communication interface and performing communication through the standby communication interface.

26. A communication apparatus, comprising:
a transceiver unit, configured to receive context information from a first CU-CP, wherein the context information comprises a context of a distributed unit DU and a context of a first central unit user plane CU-UP, and the context information is used by the second CU-CP to communicate with the DU and the first CU-UP, wherein
the transceiver unit is further configured to receive a first message; and
the transceiver unit is further configured to communicate with the DU and the first CU-UP based on the first message through a communication interface.

27. The apparatus according to claim 26, wherein the transceiver unit is further configured to receive the context information from the first CU-CP via an access and mobility management function network element.

28. The apparatus according to claim 26 or 27, wherein the first message comprises state value information from the first CU-CP.

29. The apparatus according to claim 28, wherein the apparatus further comprises a processing unit, wherein
the processing unit is further configured to determine, based on the state value information, that the first CU-CP is overloaded or faulty;
the processing unit is further configured to determine, based on that the first CU-CP is overloaded or faulty, to communicate with the DU and the first CU-UP through the communication interface; and
the transceiver unit is further configured to communicate with the DU and the first CU-UP through the communication interface.

30. The apparatus according to claim 26 or 27, wherein the first message comprises first request information from the DU or the first CU-UP, and the first request information is for requesting to communicate with the second CU-CP through the communication interface.

31. The apparatus according to claim 26 or 27, wherein the first message comprises first indication information from the first CU-CP, and the first indication information indicates that the first CU-CP is overloaded.

32. The apparatus according to claim 26 or 27, wherein the first message comprises second indication information from the first CU-CP, and the second indication information indicates to communicate with the DU and the first CU-UP through the communication interface.

33. The apparatus according to any one of claims 26 to 32, wherein
the transceiver unit is configured to establish and use the communication interface for communication; or
the transceiver unit is configured to activate a standby communication interface and use the communication interface for communication.

34. A communication apparatus, comprising:
a transceiver unit, wherein the transceiver unit is configured to send context information to a second CU-CP, wherein the context information comprises a context of a distributed unit DU and a context of a first central unit user plane CU-UP, and the context information is used by the second CU-CP to communicate with the DU and the first CU-UP.

35. The apparatus according to claim 34, wherein the apparatus further comprises a processing unit, wherein
the processing unit is configured to determine the second CU-CP from a set of first CU-CPs, wherein the set of first CU-CPs comprises the first CU-CP, and any two CU-CPs in the set of first CU-CPs support mutual backup; and
the transceiver unit is further configured to send third indication information to the DU and the CU-UP, wherein the third indication information indicates the second CU-CP.

36. The apparatus according to claim 34, wherein
the transceiver unit is further configured to send fourth indication information to the DU and the first CU-UP, wherein the fourth indication information indicates a set of first CU-CPs, the set of first CU-CPs comprises the first CU-CP and the second CU-CP, and any two CU-CPs in the set of first CU-CPs support mutual backup; and
the transceiver unit is further configured to receive feedback information from the DU or the first CU-UP, and determine the second CU-CP based on the feedback information, wherein the feedback information indicates the second CU-CP.

37. The apparatus according to any one of claims 34 to 36, wherein
the transceiver unit is further configured to send state value information of the first CU-CP to the second CU-CP, wherein the state value information is for determining that the first CU-CP is overloaded or faulty.

38. The apparatus according to any one of claims 34 to 36, wherein
the transceiver unit is further configured to send first indication information to the second CU-CP, wherein the first indication information indicates that the first CU-CP is overloaded.

39. The apparatus according to any one of claims 34 to 36, wherein
the transceiver unit is further configured to send second indication information to the second CU-CP, wherein the second indication information indicates the second CU-CP to communicate with the DU and the first CU-UP through a communication interface.

40. The apparatus according to claim 38 or 39, wherein before the transceiver unit sends the first indication information or the second indication information to the second CU-CP,
the processing unit is further configured to determine, based on that a load value is greater than a first threshold, that the first CU-CP is overloaded.

41. The apparatus according to any one of claims 34 to 40, wherein
the transceiver unit is configured to establish and use the communication interface for communication; or
the transceiver unit is configured to activate a standby communication interface and use the communication interface for communication.

42. A communication apparatus, comprising:
a processing unit, configured to determine a second central unit control plane CU-CP; and
a transceiver unit, configured to receive a second message, wherein
the transceiver unit is further configured to send first request information to the second CU-CP based on the second message, wherein the first request information is for requesting to communicate with the second CU-CP through a communication interface.

43. The apparatus according to claim 42, wherein
the transceiver unit is further configured to receive third indication information from a first CU-CP; and
the processing unit is further configured to determine the second CU-CP based on the third indication information, wherein the third indication information indicates the second CU-CP.

44. The apparatus according to claim 42, wherein
the transceiver unit is further configured to receive fourth indication information from a first CU-CP; and
the processing unit is further configured to determine the second CU-CP from a set of first CU-CPs, wherein the fourth indication information indicates the set of first CU-CPs, the set of first CU-CPs comprises the first CU-CP, and any two CU-CPs in the set of first CU-CPs support mutual backup.

45. The apparatus according to claim 44, wherein
the transceiver unit is further configured to send feedback information to the first CU-CP, wherein the feedback information indicates the second CU-CP.

46. The apparatus according to any one of claims 42 to 45, wherein the second message comprises state value information from the first CU-CP.

47. The apparatus according to claim 46, wherein
the processing unit is further configured to determine, based on the state value information of the first CU-CP, that the first CU-CP is overloaded or faulty;
the processing unit is further configured to determine, based on that the first CU-CP is overloaded or faulty, to communicate with the second CU-CP through the communication interface; and
the transceiver unit is further configured to send the first request information to the second CU-CP.

48. The apparatus according to any one of claims 42 to 45, wherein the second message comprises fifth indication information from the first CU-CP, and the fifth indication information indicates that the first CU-CP is overloaded.

49. The apparatus according to any one of claims 42 to 45, wherein the second message comprises sixth indication information from the first CU-CP, and the sixth indication information indicates the DU to communicate with the second CU-CP through the communication interface.

50. The apparatus according to any one of claims 42 to 49, wherein
the transceiver unit is configured to establish and use the communication interface for communication; or
the transceiver unit is configured to activate a standby communication interface and use the communication interface for communication.

51. A communication apparatus, comprising at least one processor, wherein the processor is coupled to a memory;
the memory is configured to store program instructions and data; and
the processor is configured to execute the instructions in the memory, to implement the method according to any one of claims 1 to 8, claims 9 to 16, or claims 17 to 25.

52. A computer-readable storage medium, wherein the computer-readable medium stores computer instructions, and when the computer instructions are run on a computer, the computer performs the method according to any one of claims 1 to 25.

53. A computer program product comprising instructions, wherein when the computer program product runs on a computer, the method according to any one of claims 1 to 8 is performed, the method according to any one of claims 9 to 16 is performed, or the method according to any one of claims 17 to 25 to be performed.

54. A chip, comprising a processor and a communication interface, wherein the communication interface is configured to receive data and/or information, and transmit the received data and/or information to the processor, and the processor processes the data and/or information to perform the method according to any one of claims 1 to 8, or the method according to any one of claims 9 to 16, or the method according to any one of claims 17 to 25.

55. A communication system, comprising one or more of the following communication apparatuses: the communication apparatus according to any one of claims 26 to 33, the communication apparatus according to any one of claims 34 to 41, and the communication apparatus according to any one of claims 42 to 50.

56. A communication apparatus, wherein the apparatus is configured to perform the method according to any one of claims 1 to 25.
